# EUROPEAN PATENT APPLICATION

(11) **EP 2 581 816 A1**
(43) Date of publication of application: **17.04.2013**
(21) Application number: 11184936.0
(22) Date of filing: 12.10.2011
(51) Int. Cl.: G06F 3/048, G06F 3/038, G06K 9/00

(54) **Apparatus and associated method for modifying media data entered pursuant to a media function**

(71) Applicant: Research In Motion Limited, Waterloo, ON N2L 3W8 (CA)
(72) Inventor: Klassen, Gerhard Dietrich, Waterloo, Ontario N2L 3W8 (CA); Kumar, Arun, Waterloo, Ontario N2L 3W8 (CA); Fyke, Steven Henry, Waterloo, Ontario N2L 3W8 (CA); Griffin, Jason Tyler, Waterloo, Ontario N2L 3W8 (CA)
(74) Representative: Greenaway, Martin William

(57) **Abstract**

A white board function, and an associated method, for a wireless, or other, device. Entry of graphical and audio media pursuant to the white board function is detected and correlated. A search is performed to locate substitute graphical media amenable for substitution for the entered graphical media. If located, the substitute graphical media is substituted for the entered graphical media.

## Description

The present disclosure relates generally to a manner by which to modify graphical media entered at an electronic device having a digital white board, or other media-entry functionality. More particularly, the present disclosure relates to an apparatus and an associated method by which to search for graphical media to substitute for the entered graphical media.

Substituting entered graphical media with substitute graphical media permits, e.g., an incompletely entered or roughly entered sketch to be replaced with a complete or formal drawing or sequence of drawings. An improved white board experience is provided both to a white board instructor and to a white board student.

### Background

Technological innovation has provided many new capabilities and services at affordable costs that, until recently, were available only at very high costs or were unavailable to anyone. Advancements in communication, computer processing, data storage, and other technologies have, in significant part, spurred on the technological innovation.

Such advancements have provided for the networking together of computer processing devices to permit the transfer of large amounts of data between the computer processing devices.

Advancements have also provided for the development and deployment and popular usage of radio communication systems, such as cellular communication systems. Cellular and other radio communication systems are used by many to communicate telephonically, both for business and personal purposes. For many, use of cellular and other radio communication systems through which to communicate is a primary mechanism by which telephonic communications are carried out.

Early-generation, cellular communication systems provided primarily for voice communication services and limited data communication services. New-generation systems provide for data-intensive communication services in addition to voice communication services. In such new-generation communication systems large-sized data files are communicated to carry out various data communication services.

Wireless devices, typically of small sizes, permitting portability, are used to communicate in a cellular and analogous communication system. Due to the portability provided to a wireless device, a wireless device is typically easily hand-carried and readily available for use, when needed. Communications are able to be carried out by way of a wireless device whenever the wireless device is positioned within an area encompassed by network infrastructure of a cellular communication system and the wireless device is permitted access to the network infrastructure. Wireless devices increasingly are provided with additional functionalities to perform additional communication, and other services. When provided with multiple functionalities, the wireless device is sometimes referred to as being a multi-functional device. So-called smart phones, for instance, provide multiple functionalities in additional to conventional voice communication service capability.

A wireless device includes a user interface that provides for user inputs to be entered and for viewing of outputs generated during operation of the device. The user interface provides appropriate input and output capabilities to perform the functionalities available at the wireless device. For instance, a wireless device that includes a messaging capability often times includes a keyboard input element, such as a QWERTY keypad, that provides alphanumeric keys associated with alphabetic characters and numerical digits. A user of the device enters textual information by actuating the keys of the keypad. The keypad is also used pursuant to performance of various other functions and services of which the device is capable of performing. The device also often includes a visual display element that provides a visual display of information formed or utilized pursuant to operation of a particular function at the device.

Included amongst the functionalities and capabilities provided to a wireless, or other electronic device, is a capability to perform a multimedia service. A multimedia service utilizes two or more types of data, such as both video and voice data. A multimedia service can, for instance, be carried out locally to be performed at the device. Other services include communication of multimedia data to or from the device. A so-called white board application is exemplary of a functionality that is permitting of implementation as a multimedia service. White board applications are available and regularly implemented in networked communication systems, both wired and wireless systems, that provide data connections.

A white board application is implemented at a communication device by, e.g., providing a user interface that is permitting of input of graphical information, such as a hand-drawn sketch or text. User-entered information, however, often consists of rough sketches that are quickly entered and are of poor presentation quality. A manner by which to provide for improved quality of graphical representations entered pursuant to a whiteboard function at a communication device would therefore be advantageous.

It is in light of this background information related to electronic devices that the significant improvements of the present disclosure have evolved.

### Brief Description of the Drawings

Figure 1 illustrates a functional block diagram of a communication system in which an implementation of the present disclosure is operable.

Figure 2 illustrates a functional block diagram of a wireless device of an implementation of the present disclosure.

Figure 3 illustrates a process diagram representative of the process of operation of an implementation of the present disclosure.

Figure 4 illustrates another functional block diagram of a wireless device of an implementation of the present disclosure.

### Detailed Description

The present disclosure provides an apparatus and an associated method for modifying graphical media entered at an electronic device that has a digital whiteboard, or other media-entry functionality.

Through operation of an implementation of the present disclosure, a manner is provided by which to search for graphical media to substitute for entered graphical media.

In one aspect of the present disclosure, substituting of the entered graphical media with the substitute graphical media permits an incompletely entered or roughly-entered sketch to be replaced with a complete, good-quality drawing or sequence of drawings.

In another aspect of the present disclosure, a graphical interface is provided that permits entry, such as by a white-board instructor, of graphical information, e.g., graphical information related to a sketch, drawing, or other graphical representation. The interface comprises, for instance, a touch screen or other interface element that permits for the entry of graphical representations.

In another aspect of the present disclosure, an acoustic transducer such as a microphone is provided. The acoustic transducer receives input sound, e.g., audio information into electronic form. The input sound information may comprise speech data enunciated by, e.g., the white-board instructor, and the graphical information is entered by way of the graphical interface. Thereby, both audio and graphical media is input.

In another aspect of the present disclosure, a correlator correlates the entered graphical information together with the entered voice information. The correlation between entered audio media data and the entered graphical media data synchronizes the media together. The correlation is performed using, e.g., time coincidence or other type of association mechanism. The media of the multiple media types is stored.

In another aspect of the present disclosure, a detector analyzes the entered voice media and detects salient portions, e.g., words or groups of words, of the entered voice media. The salient portions are portions of the entered media that are permitting of inference to be made of the associated graphical representation. The salient portions are detected, for example, by comparing entered portions of the media with a database containing indications of phrases or the like. A salient portion of the entered media is ascertained when a match is made between entered media and indications stored at the database.

In another aspect of the present disclosure, the salient portions of the entered media detected by the detector are used to locate substitute graphical media. A search is performed of media repositories, e.g., local data repositories or external data repositories accessible by way of communication connectivity, with a remotely-positioned entity. The search is performed to locate four graphical-media instances that are conceptually similar to the entered graphical media that is associated with the salient portions of the corresponding audio media.

In another aspect of the present disclosure, an interface, e.g., a graphical or textual interface, is provided that permits entry of textual information. The textual information, such as a label added to a sketch, is detected and used alone or in conjunction with the associated sketch to locate substitute graphical media.

In another aspect of the present disclosure, if substitute media is located, the substitute media is accessed. A substituter is utilized to substitute the substitute graphical media for the entered graphical media. The substitute graphical media comprises, for instance, good-quality graphical representations corresponding to the entered representations. The substitute graphical media may comprise a complete representation of a partially-entered graphical representation. In one implementation, the substitute graphical representation comprises a sequence of graphical representations in substitution for the entered graphical media.

In another aspect of the present disclosure, the substitute graphical media is substituted for the entered graphical media automatically. The substitute graphical media may be substituted only responsive to approval, such as by the white board instructor or another having supervisory authority.

In another aspect of the present disclosure, a confidence level is associated with substitute graphical media. If there is a high confidence level that the substitute media is an appropriate substitute for the entered graphical media, the substitute media is, e.g., automatically substituted for the entered media. If the substitute media is associated with a lower confidence level, then approval may be needed to substitute the substitute media for the entered, graphical media. In this implementation, the confidence level associated with potential, substitute media is, e.g., compared with a threshold value and determination is made responsive to the comparison whether automatically to substitute the substitute media for the entered media or to require approval of the substitution.

In another aspect of the present disclosure, an identifier is provided to sense the identity of the white board instructor, i.e., the person entering the graphical media. The identification made by the identifier is associated with the substitute graphical media. The association may be subsequently utilized to facilitate subsequent selection of substitute media.

In another aspect of the present disclosure, a learning algorithm is further provided that utilizes past substitutions to facilitate subsequent selection of substitute media. Use of the learning algorithm permits improved-accuracy inferences and substitute location of substitute media.

Thereby, improved white board experience is provided, both to the white board instructor and to a white board student.

In these and other aspects, an apparatus and an associated method are provided for facilitating modification of a media event. An input detector is configured to detect input of entered graphical media pursuant to a media event. An information searcher is configured to search for substitute graphical media that is amenable for substitution for the entered graphical media. A substituter is configured to substitute the substitute graphical media, if any, located by the information searcher or for the entered graphical media.

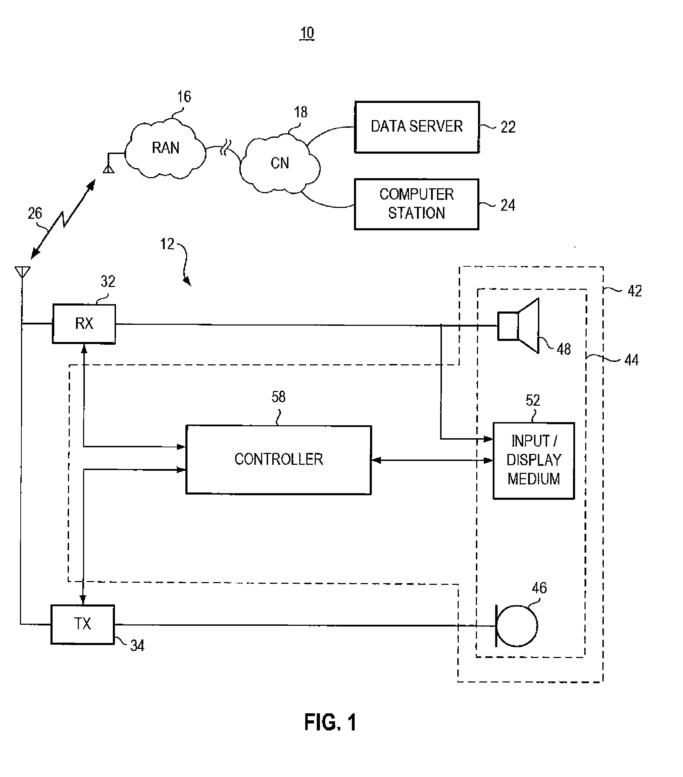

Turning first to Figure 1, a communication system 10 provides for communications with communication stations, here wireless devices of which the wireless device 12 is representative. In the exemplary implementation, the communication system 10 forms a cellular communication system operable in general conformity with a cellular communication system operating specification. The communication system 10 is representative of any of various communication systems. The communication station 12 is representative of any of various electronic devices, including stand alone devices that do not include communication connectivity with a communication network.

Accordingly, while the following description shall be described with respect to the exemplary implementation in which the communication system forms a radio communication system and the communication station 12 comprises a wireless device, it should be understood that the following description is by way of example only and that, in other implementations, the teachings of the present disclosure are analogously implementable in other manners. The communication station 12 is representative of any electronic device capable of performing the operations needed pursuant to an implementation of the present disclosure and, e.g., is implementable as a standalone device or as a network device connected in a wire line data network.

The communication system 10 includes a network part comprising a radio access network (RAN) 16 and a core network (CN) 18. Communication entities, such as a data server 22 and a computer station 24, are placed in communication connectivity with the core network 18. The data server 22 forms a depository of data that is accessible during operation of the communication system.

Communication connectivity between the network part of the communication system 10 and the wireless device 12 is provided by radio channels 26, represented by the arrow in the figure, defined upon a radio air interface formed between the network and the wireless device 12.

The wireless device 12 includes transceiver circuitry, here represented by a receiver (Rx) 32 and transmitter (Tx) 34. Information sent to the wireless device is detected by the receiver 32. Information sourced at the wireless device 12 is sent by the transmitter 34. The transceiver circuitry of the wireless device is utilized pursuant to performance of communication services including media data services.

The wireless device 12 also includes a user interface 44 here including a microphone 46, a speaker 48, and an input/display medium 52, implemented, for example, as a touch-screen display. When implemented in this manner, the input/display medium enables user interaction with the device 12 by way of graphical user interface displays that are displayed at the input/display medium. The speaker 48 is coupled to the receiver 32, and the microphone 46 is coupled to the transmitter 34.

The wireless device further includes a controller 58 that provides overall control of the wireless device including control of the receiver 32, transmitter 34, and the user interface 44 as well as elements thereof. Conventional control functions and control over various aspects of the operation of the wireless device is provided pursuant to operation of the controller. The controller is further operable pursuant to an implementation of the present disclosure.

As mentioned previously, white board functionality is sometimes provided to a wireless device. A user of the wireless device, when utilizing the whiteboard functionality, is able to input whiteboard information that is detectable by another, positioned either locally or remotely. The user that inputs whiteboard information shall, at times, be referred to as a whiteboard instructor. A recipient of the whiteboard information shall, at times, be referred to as a whiteboard student.

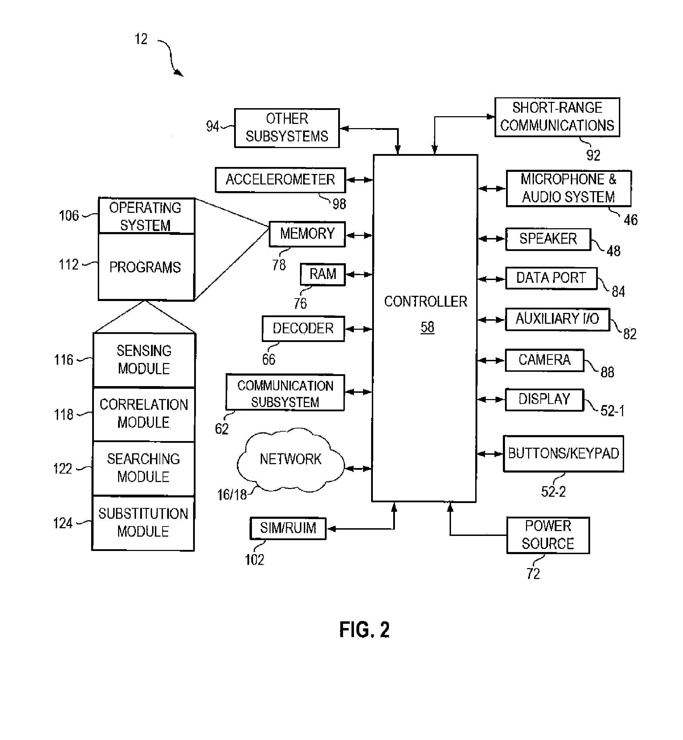

Figure 2 illustrates the wireless device 12 of an exemplary implementation of the present disclosure. The wireless device 12 is again shown to include a controller 58. The controller is implemented by any of various appropriate processors or other control circuits. The controller controls overall operation of the wireless device, including control of voice, data, and command communications, which are implemented by a communication subsystem 62. The communication subsystem 62 includes the receiver 32 and transmitter 34 shown in Figure 1. The communication subsystem 62 is used, amongst other things, to initiate and to support an active voice call or data communication session. The communication subsystem 62 is comprised of any of various combinations of hardware, software, and firmware to perform various designated functions. The software is functionally or conceptually divided into software modules. Software in one module is able to share or to call upon functions of another module.

Data received by the wireless device is processed by a decoder 66, which performs decompression and decrypting operations. The wireless device receives information from, and sends information to, the networks 16/18. The communication subsystem 62 facilitates initiation and operation of an active call when the wireless device is in a real-time, voice communication session. The networks 16-18 are of any of various types of networks including, for example, a cellular network, a wireless data network, a wireless voice network, and a network that supports both voice and data communications. The radio access network 16 of the networks 16/18 uses any of a variety of formats, protocols, or standards for example, the GSM (Global System for Mobile Communications), CDMA (Code Division Multiple Access), wireless Ethernet (Institute of Electrical and Electronic Engineers Standard 802.11), or any of various other standards or wireless networking protocols.

A power source 72 provides operative power to operate or to charge elements of the wireless device. The power source is implemented, for example, with one or more rechargeable batteries or a port to an external power supply.

The controller 58 interacts with additional components of the wireless device, here including a random access memory (RAM) 76, an auxiliary input/output (i/o) subsystem 82, a data port 84, the speaker 48, the microphone 46, which is here identified together with an associated audio system, a camera module 88, a short-range communication system 92 and other subsystems 94. The controller 58 further interacts with a display 52-1 and input buttons or input keypad 52-2. The display 52-1 and buttons or keypad 52-2 correspond to the input/display medium 52 shown in Figure 1.

A user of the wireless device 12 is able to enter data and to operate functions of the wireless device by way of appropriate entries entered at the buttons or keypad 52-2. The controller 58 interacts with the buttons/keypad 52-2, or other input element. The controller 58 further interacts with an accelerometer 98 that detects a direction of gravitational forces or user-input acceleration forces.

The wireless device 12 further includes a subscriber identity module or removable user identity module (SIM/RUIM) card 102. In an alternate implementation, the identification information is maintained elsewhere, such as at the memory 78. The wireless device further includes an operating system 106 and software program 112 formed of program code. The operating system 106 and the software programs 112 are executed by the controller 58 during operation of the wireless device. The operating system 106 and the software programs 112 are stored, for example, at a persistent, updatable store, such as the memory 78. Additional applications or programs can be loaded by way of the network 16/18, the auxiliary i/o subsystem 82, the data port 84, the short-range communication subsystem 92, or another subsystem 94 that is suitable for transferring program files.

The software programs 112 include software modules. Here, software modules associated with the whiteboard functionality provided at the wireless device are shown. The modules include a sensing module 116, a correlation module 118, a searching module 122, and a substitution module 124. While the functions represented by the modules 116, 118, 122, and 124 are, in the implementation shown in Figure 2, each formed of program code executable during operation of the controller 58, in alternate implementations, the functionality provided by one or more of the modules is carried out alternately, or additionally, in other manners and in conjunction with other portions of the wireless device, either portions that form other software modules or specialized hardware and firmware modules.

When the white board functionality of the wireless device is utilized, operation commences with the selection by a user of the wireless device. The user, who forms the whiteboard instructor, enters whiteboard information. In the exemplary implementation, the elements 52-1 and 52-2 form a touch-screen display. The information entered by the user is any combination of audio, textual, and graphical information, such as a sketch that contains textual information together with audio comments.

The sensing module 116 is invoked and operates to sense the identity of the user that enters the graphical media information. The identity of the user is sensed in any of various manners including, for instance, specific entry by the user of identity information, default sensing of an authorized user of the wireless device, or comparison of the entered information with stored information from which identity information is ascertainable.

The correlation module 118 is also invoked. The correlation module analyzes the entered information and detects salient portions of audio media that is entered as part of the whiteboard information. Correlation is performed to align the entered audio media with the entered graphical or textual information. The entered graphical or textual information facilitates the selection of the salient portions of the audio media, which comprise words that permit an inference of the semantics of the associated graphical media to be made.

The searching module 122 is invoked and operates to search for substitute graphical media for entered graphical media. The search is performed utilizing, e.g., information analyzed and obtained during operation of the correlation module. The search is of substitute graphical media available at the wireless device, such as stored at the memory 78 or elsewhere, such as at a device placed in communication connectivity with the networks 16/18. The substitute graphical media selected for substitution for the entered graphical media comprises, for instance, a representation that corresponds to the entered graphical media but which is in better form or, for instance, additional graphical media that is additive to the entered graphical media.

The substitution module 124 is invoked and operates to substitute the substitute graphical media for the entered graphical media. By substitution of the substitute media, an improved whiteboard display is provided or a more complete whiteboard display, containing more than the entered, graphical media, is provided.

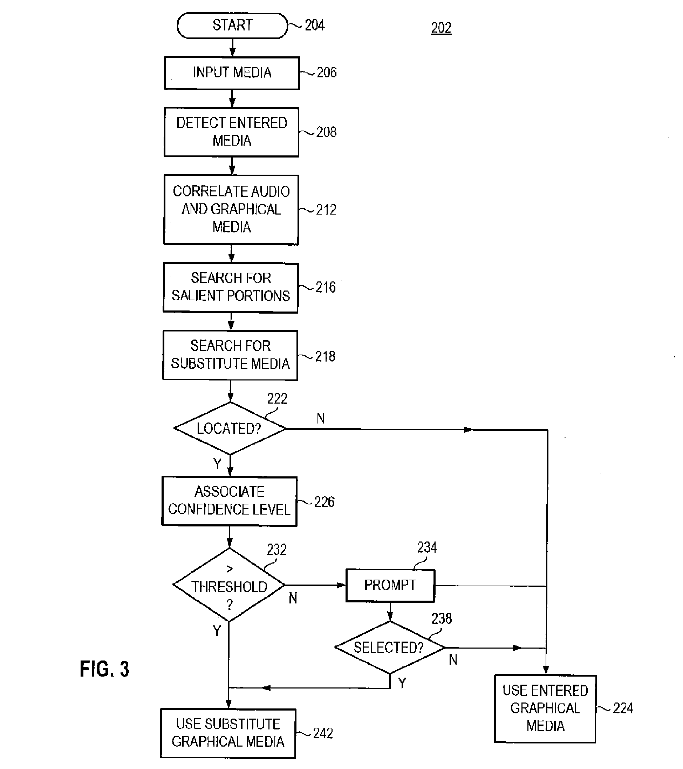

Figure 3 illustrates a process, shown generally at 202, representative of the process of operation of an implementation of the present disclosure. In one implementation, the process 202 is implemented by execution of the software modules 116-124 of the software programs 112. Subsequent to start, indicated by the start block 204, a white board instructor, or other user, enters media pursuant to a white board service, as indicated by the block 206. The entered media comprises multimedia, here both graphical media and audio media.

Then, and as indicated by the block 208, the entered media is detected. Both entry of audio media and entry of graphical media is detected. Then, and as indicated by the block 212, the entered and detected graphical media and/or audio media is correlated, to permit association of audio media with graphical media, such as audio media entered concurrently with the generation of the graphical media. Correlation is carried out, e.g., by comparing times at which audio media is entered with times at which graphical media is entered. Graphical media entered in time proximity to the entered audio media is considered to be associated, i.e., correlated, with each other. From this association, salient portions of the audio media are identified.

Once the media is correlated, a search is performed, indicated by the block 216, of the entered audio media to detect salient portions of the entered audio media. The salient portions of the audio media permit inference to be made of the semantics of the graphical media. For instance, salient portions of the audio media are considered to be audio portions that are entered in time proximity to selected graphical media entries.

As indicated by the block 218, a search is performed to locate or otherwise identify graphical media that is conceptually similar to the entered graphical media associated with the salient portions of the audio media. The search is formed, e.g., using keywords obtained from the salient portions of the audio media. A search is made, e.g., of locally stored media and of remotely stored media that has keywords that indicate the associated media to be appropriate to substitute for the entered graphical media. In one implementation, a search is made responsive to entry of an instruction or command to search for media. In addition to a search for media that is similar to the already-entered media, the instruction or command also, e.g., includes identification of media, such as by subject-type, for which a search is to be performed. The identification contained in the instruction or command may, but need not be, related to previously-entered media. The instruction or command can be entered at any of various times, including prior to entry of media pursuant to white-board operation. Then, and as indicated by a decision block 222, a determination is made as to whether the search has identified such graphical media. If not, the no branch is taken, and the entered, graphical media is utilized, as indicated by the block 224.

If, conversely, graphical media is located, the yes branch is taken to the block 226, and a confidence level is associated with the media. In one implementation, the confidence level is based, in part, upon keyword similarity, upon prior successful substitution of media from the location from which the media is obtained, or other indicia, such as authorship, of the media. Then, and as indicated by the decision block 232, a determination is made as to whether a confidence level is better than a threshold.

If the confidence level is worse than a selected threshold, a no branch is taken to the block 234, and a prompt is generated to request manual decision of whether to substitute the located graphical media for the entered graphical media. A determination is made, indicated by the decision block 238 as to whether manual selection is made to make substitution for the entered graphical media. If not, the no branch is taken to the block 224. Otherwise, if selection is made to make the substitution, the yes branch is taken to the block 242, and the substitution is made. The yes branch taken from the decision block 232 also extends to the block 242 and the substitution is made, in this scenario, automatically.

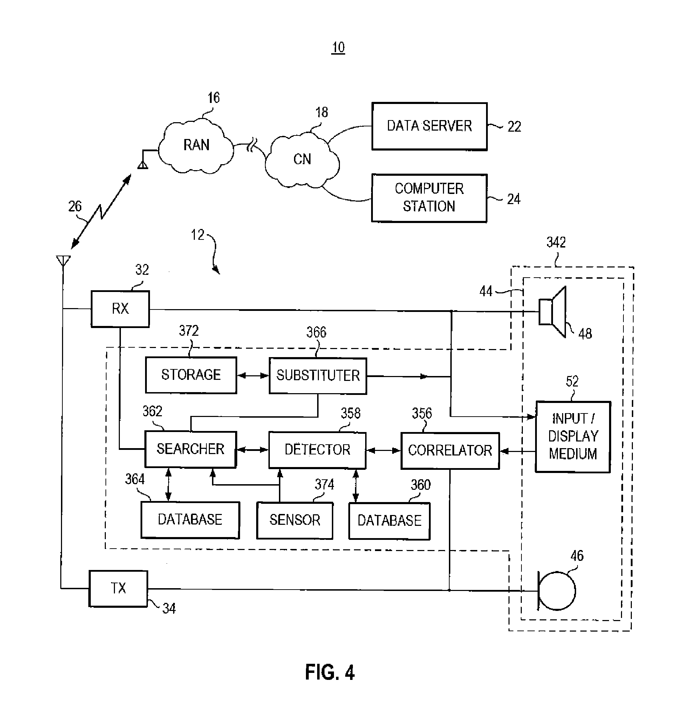

Figure 4 illustrates another representation of the wireless device 10. The wireless device includes an apparatus 342 that provides whiteboard functionality. The apparatus 342, in other implementations, is implanted at other devices including fixedly connected devices and at standalone devices without communication connectivity.

The apparatus 342 is represented functionally and is formed of functional elements, implementable in any desired manner. Here, the apparatus includes the user interface 44 including the microphone 46, the speaker 48, and the input medium 52, such as a touch screen or other white board entry mechanism. The apparatus further includes a correlator 356, a detector 358, an information searcher 362, a local database 364, a substituter 366, a storage element 372, and a sensor 374. The elements 356, 358, 362, 366, 372, and 374 are implemented in any desired manner including, for instance, as program code or software modules, as described with respect to the implementation shown in Figure 2, as well as hardware, firmware, programmable arrays, etc.

A user of the device 12, herein referred to as the white board instructor, enters input information by way of the input medium 52 and the microphone 46. That is to say, verbal media is entered by way of the microphone 46, and graphical media is entered by way of the input medium 52. The graphical media includes, e.g., sketches and textual information.

The correlator 356 correlates the entered audio media with the entered graphical media to synchronize the respective media. The correlator utilizes, for instance, time coincidence or other association mechanism by which to correlate the entered audio and graphical media.

The media, once correlated, is analyzed by the detector 358. The detector detects salient portions of the audio media. The salient portions of the audio media comprise words, or groups of words, of the entered audio media that permit an inference of the semantics of the associated graphical media to be made. In one implementation, the inference is made by comparing detected portions of the audio media with, here, local database information stored at the database 360. In this implementation, a comparison is made to detect a match between stored information and verbal media portions. A salient portion of the verbal media and, hence, an associated graphical media portion is ascertained when the database information matches the detected verbal media portion.

An indication of detection made by the detector is provided to the information searcher 362. The information searcher operates to search for substitute graphical media to substitute for the entered graphical media responsive to the inferred semantics of the graphical media as determined by the detector 358. The information searcher searches, e.g., the local database 364, for locally-stored graphical media that is conceptually similar to the entered graphical media. And, in one implementation, the search is made external to the device 12. That is to say, the information searcher causes a search request to be sent by the device 12 to a remote location, such as to the data server 22 to request graphical media of an instance that is conceptually similar to the entered graphical media. That is to say, the information searcher 362 causes the transmitter 34 of the device 12 to send a search request to one or more data servers 22 (shown in Figure 1), and a data server to which the request is made searches the data stored there for the graphical media that is conceptually similar to the indications contained in the request.

Responsive to the search request and resultant search, the query data server forms a response to the search request and causes the response to be routed or otherwise sent to the device 12. If graphical media is located responsive to the search, the graphical media, or indications thereof, are provided to the device 12, either together with the response, or separately. The response sent to the wireless device 12 is detected at the receiver 32 and indications of the response are provided to the information searcher.

In one implementation, when graphical media is located that is conceptually similar to the entered graphical media, the indications of the media, i.e., substitute graphical media, are provided to the substituter 366. The substituter operates to substitute the substitute graphical media for the entered graphical media entered by way of the input medium 352, once correlated with the entered audio media. The graphical media comprises, e.g., a sketch. The substituter substitutes the substitute graphical media for the entered sketch. The graphical media further comprises, e.g., textual information. The graphical media may further comprises, e.g., textual information. The substituter substitutes the substitute graphical media for the entered sketch based upon the textual information, alone or in conjunction with the sketch.

In the exemplary implementation, a confidence level is associated with the graphical media to identify the amount of confidence that the identified graphical media is an appropriate substitute for the entered graphical media. And, in the exemplary implementation, the confidence level of the identified, graphical media is compared with a threshold. If the confidence level is better than, e.g., greater than, the threshold, then the identified graphical media is substituted for the entered graphical media.

If the confidence level is worse than, e.g., less than, the threshold, then substitution is not automatically made. Instead, affirmation of the prospective substitution may be requested, here from the white board instructor. In one implementation, if the confidence level is too low, such as too far beneath the threshold, then the identified graphical media is not used in substitution for the entered graphical media.

In one implementation, an indication of the confidence level is inserted into or is caused to be displayed together with the substitute graphical media that is substituted for the entered graphical media. A viewer of the white board product, i.e., the substitute graphical media together with the correlated audio media, is provided with an indication of the confidence level associated with the substitute graphical media. In one implementation, the indication is visually represented in some element characteristic, such as the transparency of an overlay upon the substitute graphical media.

The resultant white board product is viewable by a viewer, such as a white board student, either positioned locally to view the substitute graphical media at the input medium 52, when functioning as a display element, or other display element of the device 12 or remotely, such as at the computer station 24 (shown in Figure 1) to which the white board product is sent by the wireless device 12.

In a further implementation, the sensor 374 is utilized to sense the identity of the user of the device 12 that enters the graphical media, such as the white board instructor. The sensor 374 comprises an optical sensor, a radio frequency sensor, or other type of sensor capable of sensing indications of the identity of the white board instructor. The sensed indication of the white board instructor, in one implementation, is further utilized in the search for, and selection of, the substitute graphical media. Indication of the sensed information is provided to the information searcher 362.

In one implementation, the substitution is made of the entered graphical media. In a further implementation, the substitution is made not only of the entered graphical media but further of successive graphical media entries. Rather than merely substituting a single sketch or drawing, a successive series of drawings are substituted for the entered graphical media. In one implementation, the white board instructor is presented with indications of a plurality of graphical-media scenes and the white board instructor is permitted to select the sequence of display of the scenes. In one implementation, selection is permitted to activate any available animations of the images or videos in the sequence, thereby achieving a simulation effect. In one implementation, a substitution history is created and maintained that identifies prior substitutions. The history includes, e.g., information of prior substitutions made by a particular whiteboard instructor, a location at which substitute media has been previously obtained, or any other information or indicia. The substitution history is subsequently accessed and information retrieved therefrom is used in the search for, and substitution of, media.

Thereby, a manner is provided by which to improve a media entry function, such as a white board function. Based upon entered information, a search is made for substitute graphical media. And, if located and appropriate, the substitute graphical media is substituted for the entered media.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating substitution of graphical media, said apparatus comprising:
a sensing module configured to receive input of entered graphical media;
a searching module configured to search for substitute graphical media for substitution for the entered graphical media; and
a substitution module configured to substitute the substitute graphical media for the entered graphical media.

2. The apparatus of claim 1 wherein said sensing module is further configured to detect input of audio media.

3. The apparatus of claim 2 further comprising a correlation module configured to correlate the entered graphical media and the audio media.

4. The apparatus of claim 2 wherein said correlation module comprises an association module configured to associate the audio media with the entered graphical media.

5. The apparatus of claim 2 further comprising a detection module configured to detect salient portions of the audio media.

6. The apparatus of claim 5 wherein said searching module is configured to search for the substitute graphical media based upon the salient portions detected by said detection module.

7. The apparatus of claim 5 wherein the salient portions detected by said detection module comprise salient words detected in the audio media.

8. The apparatus of claim 7 wherein the salient words comprise words that permit inference to semantics of the entered graphical media.

9. The apparatus of claim 1 wherein said substitution module is further configured to record indications of substitutions of the substitute graphical media to form a substitution history.

10. The apparatus of claim 9 wherein substitution made by said substitution module is further responsive to the substitution history.

11. The apparatus of claim 1 wherein said searching module is further configured to associate a level of confidence with the substitute graphical media.

12. The apparatus of claim 1, wherein the sensing module is further configured to sense authorship of the entered graphical media.

13. A method for substituting graphical media, said method comprising:
receiving entered graphical media ;
searching for substitute graphical media for the entered graphical media; and
substituting the substitute graphical media for the entered graphical media.

14. The method of claim 13 wherein said receiving of entered graphical media comprises receiving input of graphical media entered on a touch screen.

15. The method of claim 13 wherein said receiving input of entered graphical media comprises receiving input of entered graphical media on a whiteboard.
